# EUROPEAN PATENT SPECIFICATION

(11) **EP 3 740 040 B1**
(45) Date of publication and mention of the grant of the patent: **12.10.2022**
(21) Application number: 19174009.1
(22) Date of filing: 13.05.2019
(51) Int. Cl.: H05B 47/19

(54) **METHOD AND ARRANGEMENT FOR CONFIGURING A LIGHTING SYSTEM**
VERFAHREN UND ANORDNUNG ZUR KONFIGURATION EINES BELEUCHTUNGSSYSTEMS
PROCÉDÉ ET AGENCEMENT POUR CONFIGURER UN SYSTÈME D'ÉCLAIRAGE

(43) Date of publication of application: 18.11.2020
(73) Proprietor: Helvar Oy Ab, 02150 Espoo (FI)
(72) Inventor: Juslén, Henri, 02150 Espoo (FI)
(74) Representative: Papula Oy

(56) References cited:
- US-A1- 2019 104 384
- US-B2- 8 570 221
- RONG P ET AL: "Angle of Arrival Localization for Wireless Sensor Networks", 2006 3RD ANNUAL IEEE COMMUNICATIONS SOCIETY CONFERENCE ON SENSOR AND AD HOC COMMUNICATIONS AND NETWORKS - 25 - 28 SEPT. 2006 - RESTON, VA, USA, IEEE, PISCATAWAY, NJ, USA, 1 January 2006 (2006-01-01), pages 374-382, XP031012154, ISBN: 978-1-4244-0626-5

## Description

### FIELD OF THE INVENTION

The invention relates in general to the task of configuring a lighting system, so that one or more controlling entities of the lighting system acquires information about relative locations of luminaires of the lighting system. In particular the invention relates to the use of radar signals as a part of such configuring.

### BACKGROUND OF THE INVENTION

A centrally controlled lighting system for providing illumination in a room or other space comprises a plurality of luminaires and at least one central controller device. Communicating connections, which may be wired and/or wireless, enable the controller device to give control commands to the luminaires. In many cases one of the tasks of the controller device is to decide, which luminaires of the system should be on and at which lighting level. As an example, if users are present in only one part of the space, in order to save energy it may be advisable to make the controller device switch on only that luminaire or those luminaires that serve the area where the users are. Other luminaires of the system may be switched off, or commanded to emit light only at a significantly lower lighting level.

In order to give location-related commands to the luminaires the controller device must be aware of the locations of the luminaires within the space. The procedure of providing the controller device with such information is frequently referred to as configuring the lighting system. As such, configuring may relate to also other kinds of information. If the space is large and/or if there are numerous luminaires, manual configuring may take a considerable amount of time. Changes made in the space, like adding or replacing luminaires, may require repeating the configuring in full or at least in part. It is highly desirable to automatize the configuring, so that no manual labour is needed or at least the amount of required manual intervention is small.

A prior art document US 2019/0104384 A1 describes systems and methods for determining locations of a number of radio frequency enabled devices such as mobile devices and radio frequency equipped beacons/luminaires in within an indoor location.

Another prior art document US 8,570,221 B2 describes a system and method for localization positioning in lighting systems.

### SUMMARY

An objective of the invention is to present devices and methods that enable easy configuring of a lighting system. Another objective of the invention is to enable automatically configuring a lighting system, so that a controller device becomes aware of locations of luminaires in the space to be illuminated. A further objective of the invention is to present novel and inventive ways of utilizing radar technology in lighting. Yet another objective of the invention is to enable refining the location-based configuring of a lighting system over time.

These and other advantageous objectives are achieved by allowing a controller device to trigger radar transmissions from luminaires and by receiving such radar transmissions with a directional receiver that enables utilizing the received radar transmissions for locating the luminaires.

According to a first aspect there is provided a controller device for controlling luminaires of a lighting system. The controller device comprises a transmitter for transmitting triggering signals to said luminaires, a directional radar receiver for receiving radar signals transmitted by said luminaires in response to receiving the triggering signals, and a processing part configured to map said received radar signals into locations of said luminaires. Said processing part is configured to use, in said mapping of received radar signals into locations of said luminaires, the directional property of said directional radar receiver for determining directions to said luminaires.

According to an embodiment of the first aspect the processing part is configured to use, in said mapping of received radar signals into locations of said luminaires, time differences between said transmitted triggering signals and said received radar signals for determining distances between said controller device and said luminaires.

According to an embodiment of the first aspect the transmitter is a radar transmitter.

According to an embodiment of the first aspect the transmitter is a wireless transmitter of a radio communications system.

According to an embodiment of the first aspect the controller device comprises additionally a radar transmitter.

According to an embodiment of the first aspect said directional radar receiver is configured to receive radar echoes that are reflections of radar signals transmitted by said radar transmitter, and said processing part is configured to map said radar echoes into locations of radar-reflective targets by using the directional property of said directional radar receiver for determining directions to said targets.

According to an embodiment of the first aspect said processing part is configured to use, in said mapping of said radar echoes into said locations of said targets, time differences between said transmitted radar signals and said received radar echoes for determining distances between said controller device and said targets.

According to an embodiment of the first aspect said processing part is configured to coordinate a mapped location of a radar-reflective target with a mapped location of an identified luminaire, said transmitter is configured to transmit a triggering signal to said identified luminaire, and said processing part is configured to map a subsequent radar signal received from said identified luminaire into a refined location of said identified luminaire.

According to an embodiment of the first aspect the controller device comprises a receiver of a radio communications system, and the processing part is configured to identify, in response to a switch-on message received from a particular luminaire through said receiver, one or more additional luminaires that according to previously accomplished mapping into locations of said luminaires have a certain locational relationship with respect to said particular luminaire. Said transmitter is configured to transmit selective switch-on commands to said one or more additional luminaires, wherein said selective switch-on commands comprise an indication of intended light level.

According to an embodiment of the first aspect said processing part is configured to select at least some of said additional luminaires on the basis of their closeness in location with said particular luminaire.

According to an embodiment of the first aspect said processing part is configured to select at least some of said additional luminaires on the basis of their closeness in location with a structure to be illuminated.

According to a second aspect there is provided a method for controlling luminaires of a lighting system. The method comprises transmitting triggering signals to said luminaires, receiving radar signals transmitted by said luminaires in response to receiving the triggering signals, and mapping said received radar signals into locations of said luminaires. Said mapping of received radar signals into locations of said luminaires comprises using a directional radar receiver for determining directions from which said radar signals were received, and mapping said directions into corresponding directions to said luminaires.

According to an embodiment of the second aspect said mapping of received radar signals into locations of said luminaires comprises using time differences between said transmitted triggering signals and said received radar signals for determining distances to said luminaires.

According to an embodiment of the second aspect the method comprises identifying, in response to a switch-on message received from a particular luminaire, one or more additional luminaires that according to previously accomplished mapping into locations of said luminaires have a certain locational relationship with respect to said particular luminaire, and transmitting selective switch-on commands to said one or more additional luminaires, wherein said selective switch-on commands comprise an indication of intended light level.

According to an embodiment of the second aspect at least some of said additional luminaires are selected on the basis of at least one of: their closeness in location with said particular luminaire, their closeness in location with a structure to be illuminated.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates luminaires and controller devices of a lighting system,
**figure 2** illustrates an example of a luminaire responding to a triggering signal,
**figure 3** illustrates another example of a luminaire responding to a triggering signal,
**figure 4** illustrates a number of alternative implementations of a luminaire equipped with a radar module,
**figure 5** illustrates an example of a structure of a controller device,
**figure 6** illustrates a method,
**figure 7** illustrates a method,
**figure 8** illustrates a method, and
**figure 9** illustrates a method.

### DETAILED DESCRIPTION

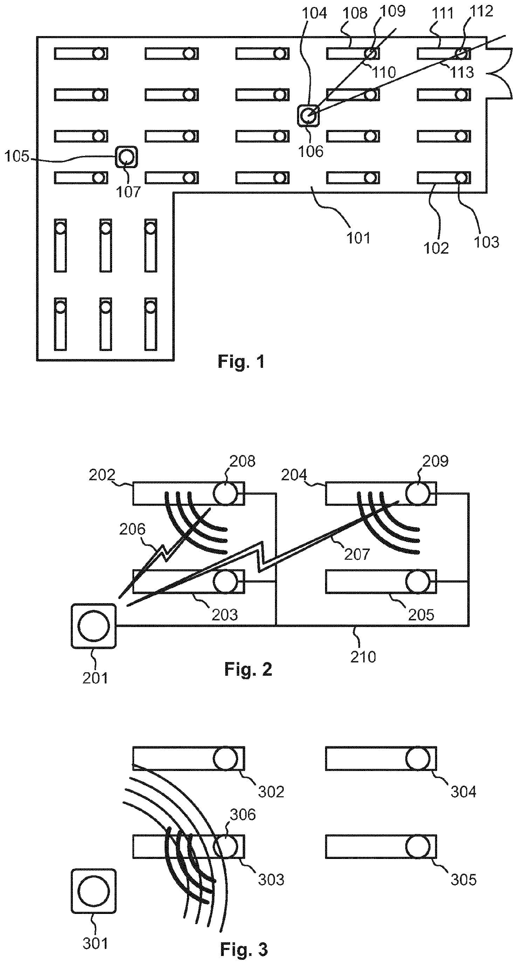

Fig. 1 illustrates a lighting system that may provide a framework for the concepts discussed below. The lighting system is provided for illuminating a space 101, which in this example is an L-shaped indoor space. There are a total of 26 luminaires in the lighting system, an example of which is luminaire 102. At least a number of the luminaires comprise a radar transmitter, an example of which is the radar transmitter 103 of the luminaire 102. In this example all luminaires of the lighting system are identical and they all comprise a radar transmitter of their own, but this is not a mandatory requirement. The lighting system may comprise different kinds of luminaires, and only a subgroup of the luminaires in the lighting system may be equipped with radar transmitters.

The lighting system comprises one or more controller devices, examples of which are the controller devices 104 and 105 in fig. 1. A controller device is a device that is equipped for and capable of sending control commands to other devices of the lighting system. Examples of control commands will be described in more detail later in this text. A controller device may operate automatically, so that producing and sending a control command may take place without human intervention. Additionally or alternatively a controller device may be at least partly manually operated, so that in at least some cases it sends a control command in direct response to a human user performing an action, like pressing a button or flicking a switch.

At least one of the controller devices, and in this example both controller devices 104 and 105, comprises a radar receiver 106 and 107 respectively. The radar receivers 106 and 107 of the controller devices 104 and 105 are directional radar receivers, meaning that that they have directional resolution in reception. In other words, the radar receivers 106 and 107 of the controller devices 104 and 105 are capable of detecting the direction, in at least one directional space, from which a received radar signal came. The directional space in question may be a three-dimensional directional space, or it may be a two-dimensional directional space. In the last-mentioned case the two-dimensional directional space is preferably a plane parallel or essentially parallel to the plane defined by the locations of the luminaires of the lighting system. In a simple exemplary case the luminaires are each hanging from the horizontal ceiling of an indoor space, supported by equally long wires, so that they define a plane as such. The two-dimensional directional space may also be represented as an imaginary plane, generally parallel to the floor and/or ceiling of the space, to which the luminaires may be projected as in a two-dimensional map.

The term "radar" is used here in its common meaning to describe a device operating on wireless radio transmissions on one or more frequencies that are easily reflected by objects that are commonly encountered in the space in question. If indoor spaces are considered, the most common objects that should reflect the radar signal are human users, pieces of furniture, as well as walls and other fixed structures. Radar frequencies in the order of 5 GHz are possible for use but not consider most optimal for indoor environments, because they tend to see too much: the radar signal goes through lightweight structures and may reflect from an object that from the point of view of a human user is in a different, adjacent space. Radar frequencies in the order of 24 GHz and/or 60 GHz are considered more advantageous, because the higher the frequency the weaker the penetration. Concerning known modes of radar operation such as DCW (Doppler continuous wave), FSK (frequency shift keying), or FMCW (frequency modulated continuous wave) none are excluded, but the last-mentioned is often considered the preferable choice because of its versatile applicability to various purposes in radar use.

Most preferably there are at least as many controller devices in the lighting system as are needed to establish unobstructed, line-of-sight connections to all those luminaires of the lighting system that are equipped with radar transmitters. This requirement comes from the preference of radio signals at higher frequencies that are not capable of penetrating fixed structures. In deciding the number and location of controller devices one should consider also the distances between each controller device and the most distant luminaire from which it should be able to receive radar signals. Factors like the transmitting power available in the radar transmitters and the reception performance of the radar receivers, as well as the radar frequency or frequencies in use and the existence of obstructing structures, need to be considered in deciding the number and location of controller devices.

A controller device of the kind meant here comprises a transmitter for transmitting triggering signals to luminaires of the lighting system. This transmitter may be the same transmitter that the controller device uses to transmit control commands, or it may be a different transmitter. Triggering signals are special kind of control commands meant to trigger the receiving luminaire into transmitting a radar signal that in turn can then be received by the radar receiver of the controller device.

Figs. 2 and 3 describe some examples of transmitting triggering signals from a controller device to a number of luminaires. In fig. 2 the controller device 201 comprises a wireless transmitter of a radio communications system, such as a Bluetooth, BLE (Bluetooth Low Energy), ZigBee, or other. The luminaires 202, 203, 204, and 205 comprise wireless receivers of the same radio communications system, so that radio communications between the controller device 201 and the luminaires 202, 203, 204, and 205 can convey triggering signals (and possibly other signals as well). The use of the radio communications system to transmit triggering signals from the controller device 201 to the luminaires 202 and 204 is shown with reference designators 206 and 207 respectively in fig. 2. The radar transmitters 208 and 209 of the luminaires 202 and 204 are shown to respond by transmitting radar signals.

As another example, the controller device 201 and the luminaires 202, 203, 204, and 205 of fig. 2 all connect to a wired communications bus 210, which may be for example a DALI bus (Digital Addressable Lighting Interface), its more advanced version DALI2, or a CAN bus, a KNX bus, or any other wired communications bus. A wired communications bus (or other, not-bus-like wired communications system) of this kind can also be used to transmit triggering signals, in which case the transmitter that in the controller device 201 is configured to transmit the triggering signals to luminaires is naturally the transmitter of the wired communications system.

In fig. 3 the controller device 301 comprises a radar transmitter that it uses to transmit triggering signals to the luminaires 302, 303, 304, and 305. In this case the radar transmitters of the luminaires act like radar transponders, by transmitting a radar signal of their own as a response to receiving a radar signal from the controller device 301. This operation is illustrated particularly with the radar transmitter 306 of the luminaire 303. The examples shown in figs. 2 and 3 are not in any way mutually exclusive. As an example a controller device that uses a wireless transmitter of a radio communications system for transmitting triggering signals like in fig. 2 can additionally comprise a radar transmitter of its own.

Referring back to fig. 1 and to the known challenges of sending appropriate location-related commands to the luminaires, it is desirable to make the controller devices 104 and 105 aware of the locations of the luminaires in the space. More particularly, in order to enable at least one of the controller devices to control the illumination of the space 101 on the basis of location, that controller device should know the relations between luminaire identifiers (with which control commands can be directed to particular luminaires) and the locations of the space 101 illuminated by the corresponding luminaires. The process of making a controller device aware of these relations can be called configuring. The radar signals that the controller device receives from the luminaires can be used in such configuring, so that the controller device is configured to map the received radar signals into locations of the luminaires.

In such mapping the directional property of the directional radar receiver in the controller device can be used to determine directions to the corresponding luminaires. As an example, the controller device 104 may transmit triggering signals to luminaires 108 and 111. In luminaire 108 this triggers the transmission of a radar signal from its radar transmitter 109. The directional radar receiver 106 of the controller device 104 detects this radar signal as coming from the direction 110. Similarly in luminaire 111 the triggering signal triggers the transmission of a radar signal from its radar transmitter 112, and the directional radar receiver 106 of the controller device 104 detects this radar signal as coming from the direction 113. A direction is already an indication of location; with suitable placing of the controller device 104 it can be ensured that no two luminaires (or more accurately: no radar transmitters of two individual luminaires) are located in exactly the same direction measured from the controller device.

Another quantity pertinent to location is distance. Although not necessary in all implementations, it may be advantageous to make the controller device aware of not only the directions to the various luminaires but also of the distances between it and said luminaires. Since in radar-based systems the task of determining distance is naturally related to differences in time, the controller device may be configured to use, in mapping the received radar signals into locations of luminaires, time differences between transmitted triggering signals and received radar signals for determining distances between it and the luminaires.

If distance is to be measured, the way in which the triggering signal is transmitted has certain significance. In order to eliminate random errors in the distance measurements it should be ensured that the distance to the luminaire is the sole, or at least the most decisive, factor that affects time delays from the transmission of a triggering signal to receiving a corresponding radar signal at the controller device. This explains why wireless ways of transmission, either through a radio communications system or in the form of a triggering radar transmission, may be preferred over wired ways of triggering. The cable that implements a wired connection may take paths that are far from directly proportional to line-of-sight distance, causing transmission delays the lengths of which cannot be related to direct distance.

Another factor in the way in which the triggering signal is transmitted is the possibility of each responding luminaire to do so according to a constant timetable. The time it takes for the luminaire to detect the arrival of a triggering signal and to initiate and realize the transmission of a radar signal should be constant. For example if the triggering signals are addressed, i.e. directed to an individual luminaire or a subgroup of all luminaires at a time, the number of significant bits in each address should be the same. Alternatively it should be otherwise ensured that the process of decoding an address and drawing proper conclusions takes exactly as long time in each luminaire.

It should be noted, though, that the determining of distances between the controller device and luminaires, if in use, does not necessarily need to result in exact knowledge of absolute distances. In many cases it is sufficient if the controller device is capable of putting the luminaires in an order of relative distances: it may suffice to know that luminaire A is further away than luminaire B, even without knowing exactly how far from the controller device any of these luminaires are. Any task of determining distances may be characterized as concerning the determination of at least relative distances.

It is not necessary to use any addressing for triggering signals if the controller device is capable of recognizing, solely by examining the radar signals it receives from the luminaires, which radar signal comes from which luminaire. This is possible for example if the luminaires use some kind of unique modulation in transmitting their radar signals. However, in particular if there is a large number of luminaires in the lighting system, sending a non-addressed common triggering signal and receiving all the resulting radar signals may place serious challenges to the processing capability of the radar receiver in the controller device.

One possibility that may be taken into account is to make the luminaires transmit their radar signals according to some previously known, accurate enough timetable. The luminaires may comprise accurate real time clocks for some reason, and such accurate real time clocks may be then be used to accurately time the transmission of radar signals from the various luminaires.

The use of a radio communications system, such as Bluetooth, BLE, ZigBee, or other, to transmit the triggering signals involves the advantage that most radio communications systems of this kind inherently include mechanisms for addressing. It may then be not necessary to develop any new, purpose-built addressing schemes solely for the purpose of sending addressed triggering signals. The use of addressed triggering signals, which may be so accurately addressed that only one luminaire (or for example only one luminaire from each distinct directional sector) responds at a time also allows to make the radar transmitters in the luminaires relatively simple, because the only thing the luminaires are required to do in this respect is to recognize their own addressed triggering signal and respond by transmitting a radar signal of constant form.

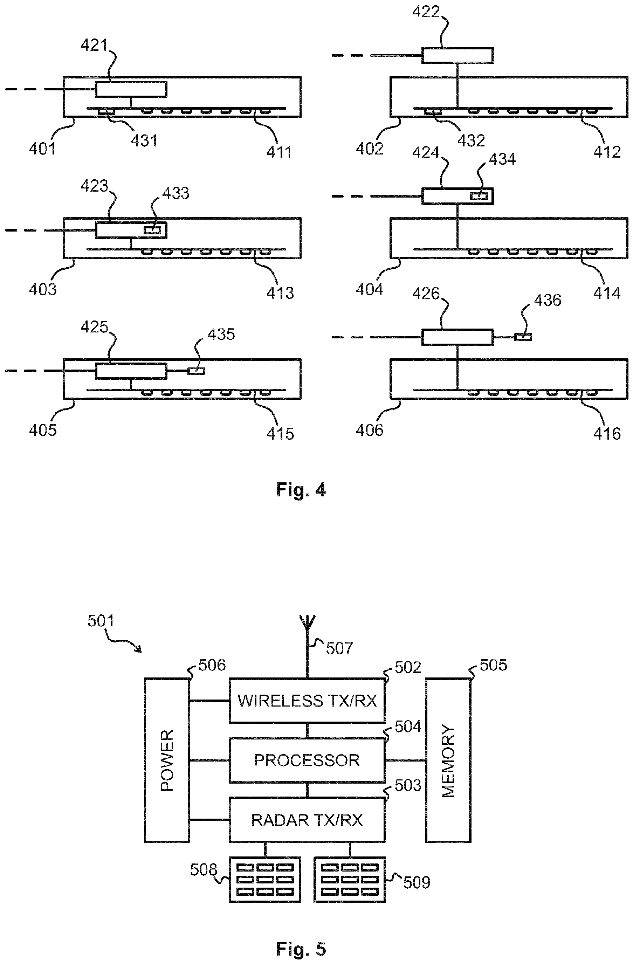

Fig. 4 illustrates schematically some possible ways of incorporating a radar transmitter in a luminaire. Fig. 4 shows schematically six luminaires 401 to 406, each of which comprises a lighting module 411 to 416, and comprises or is connected to a lighting driver 421 to 426 that converts electric input power drawn from a power line to an operating power of the respective lighting module. In luminaires 401, 403, and 405 the lighting driver 421, 423, or 425 is integrated in the luminaire, while luminaires 402, 404, and 406 are each equipped with a corresponding external lighting driver 422, 424, or 426. In luminaires 401 and 402 the corresponding radar transmitter 431 or 432 is built on the same circuit board (or otherwise within the same electronic building block) as the corresponding lighting module 411 or 412. In luminaires 403 and 404 the corresponding radar transmitter 433 or 434 is integrated within (or otherwise provided within the same electronic building block) as the corresponding lighting driver 423 or 424. In luminaires 405 and 406 the corresponding radar transmitter 435 or 436 is coupled to another electronic building block of the luminaire (here: to the corresponding lighting driver 425 or 426) with a local communications and power connection.

Fig. 5 illustrates an example of a controller device 501 for controlling luminaires of a lighting system. The controller device comprises a wireless transceiver 502 of a radio communications system, the transmitting part of which can be used as a transmitter for transmitting triggering signals to the luminaires. In this embodiment the radar part of the controller device 501 comprises a radar transceiver 503, the transmitting part of which can additionally or alternatively be used as a transmitter for transmitting triggering signals to the luminaires. The receiver part of the radar transceiver 503 is a directional radar receiver for receiving radar signals transmitted by luminaires to which said triggering signals are transmitted.

The controller device 501 comprises a processing part that comprises a processor 504 and a memory 505. The memory 505 is used to store instructions in the form of a machine-executable code that, when executed by the processor 504, causes the implementation of the methods that are described here as being methods of operation of a controller device. Saying that the processing part is configured to do something is synonymous to saying that there is machine-executable code stored in the memory that makes the processor 504 execute and/or have executed the appropriate actions.

The processing part 504, 505 is in particular configured to map received radar signals into locations of the luminaires that transmitted such radar signals. In said mapping, the processing part 504, 505 is configured to use the directional property of the directional radar receiver for determining directions to the luminaires. The processing part 504, 505 may also be configured to use, in said mapping of received radar signals into locations of said luminaires, time differences between said transmitted triggering signals and said received radar signals for determining (at least relative) distances between said controller device and said luminaires.

An operating power section 506 is shown as providing the required operating power to all electronic units of the controller device 501. The wireless transceiver 502 is shown to use an antenna 507 for transmitting and receiving signals according to the specifications of the radio communications system. The radar transceiver 503 is schematically shown to use one or more solid-state, phased-array antennas 508 and 509 to implement the directional reception and possible directional transmission of radar signals at the appropriate frequencies.

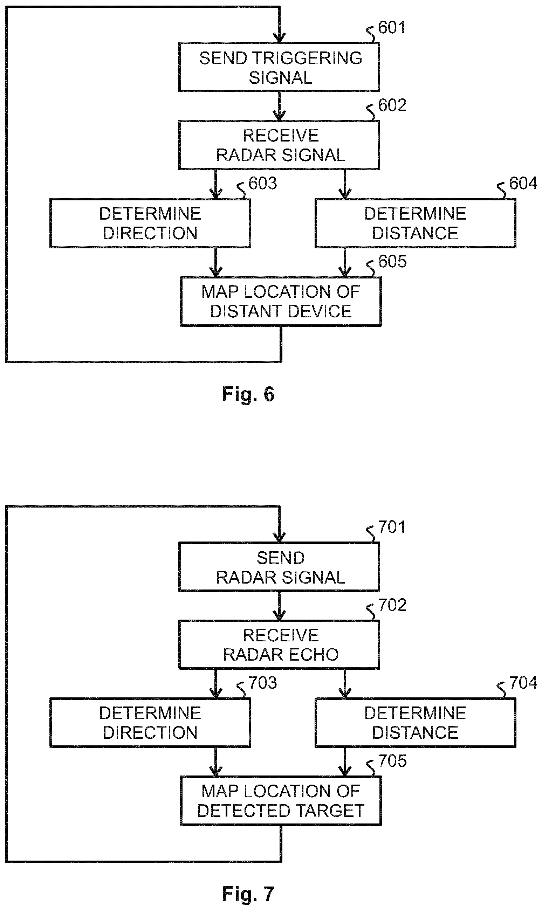

Fig. 6 illustrates a method that the controller device may execute. Step 601 in fig. 6 represents transmitting triggering signals to one or more luminaires of the lighting system. As has been described above, this can be accomplished by using a radar transmitter comprised in or at the disposal of the controller device, or by using a wireless transmitter of a radio communications system, or even by using a wired transmitter if it can be ascertained that the delays caused by various lengths of wire between the controller device and the luminaires are known or otherwise in control.

Step 602 in fig. 6 represents receiving radar signals that were transmitted by the one or more luminaires to which the triggering signals were transmitted at step 601. If a triggering signal was transmitted in some kind of addressed form, there is no need to separately recognize the luminaire from which the radar signal is received at step 602. It will be taken as granted that the luminaire will be the same to which the most recent addressed triggering signal was transmitted. If a common triggering signal was transmitted to two or more luminaires, or if triggering signals to two or more luminaires were transmitted in very close succession, step 602 may comprise recognizing - from some kind of uniquely modulated or otherwise coded radar transmissions - which radar signal was received from which luminaire.

Steps 603, 604, and 605 in fig. 6 represent mapping the received radar signals into locations of the luminaires. According to step 603, the mapping comprises at least using a directional radar receiver for determining directions from which the radar signals were received. Step 604 is not necessarily included but if it is, it comprises using time differences between transmitted triggering signals and the corresponding received radar signals for determining distances to the luminaires. Step 605 comprises at least mapping the determined directions into corresponding directions (=locations in terms of direction) of the luminaires, and it may comprise also using the determined distances so that the mapped locations of the luminaires take place in a coordinate system that includes distance and (at least relative) direction.

Having radar technology at the disposal of the luminaires and controller devices enables its use for also other purposes than just mapping of the kind described above. Fig. 7 illustrates a method that can be executed by a controller device that has a directional radar transceiver, i.e. which can not only receive but also actively transmit radar signals. At least the receiver part of the radar transceiver may be directional, and configured to receive radar echoes that are reflections of radar signals transmitted by the transmitter part of the radar transceiver. The processing part may be configured to map the radar echoes into locations of radar-reflective targets by using the directional property of the directional radar receiver for determining directions to said targets.

Step 701 in fig. 7 represents transmitting radar signals, and step 702 represents using the directional radar receiver to receive radar echoes that are reflections of the transmitted radar signals. Step 703 represents using the directional radar receiver for determining directions from which the radar echoes were received. Step 704 is not necessarily included but if it is, it comprises using time differences between transmitted radar signals and the corresponding received radar echoes for determining distances to the radar-reflective targets that generated the radar echoes. Step 705 comprises at least mapping the determined directions into corresponding directions (=locations in terms of direction) of the radar-reflective targets, and it may comprise also using the determined distances so that the mapped locations of the radar-reflective targets take place in a coordinate system that includes distance and (at least relative) direction.

The radar-reflective targets may be moving targets, which are typically users moving in the space served by the lighting system. The radar-reflective targets may also be stationary targets, such as structures (walls etc.) of the space or pieces of furniture. Taken that the controller device is also capable of mapping radar signals received from luminaires into locations of said luminaires, it may be capable of coordinating the mapped locations so that it can deduce, what are the locational relationships between luminaires and detected radar-reflective targets. This capability can be utilized in a number of ways.

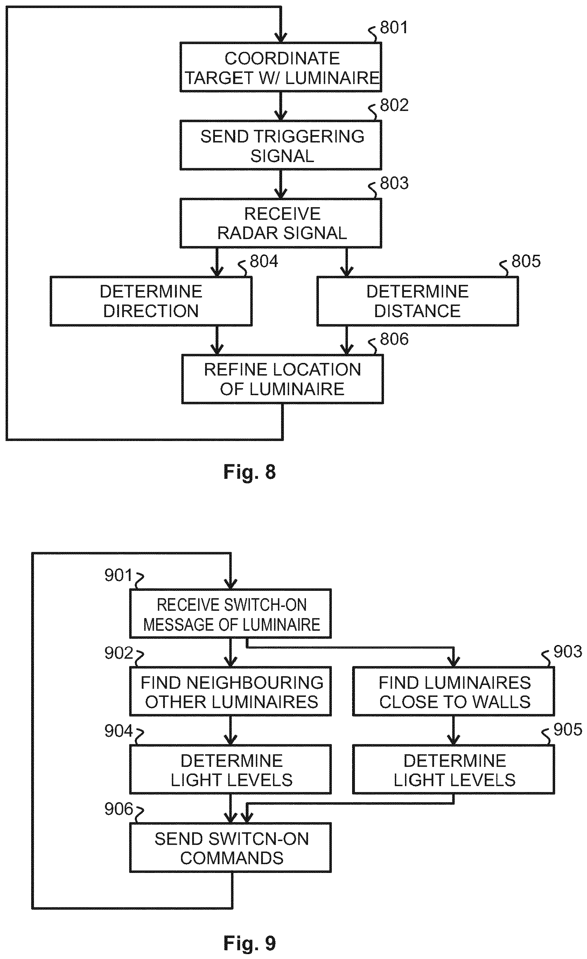

A method that implements one such way is illustrated in fig. 8. This method aims at using the detection of radar-reflective targets to refine, i.e. to make more accurate, the information that the controller device has about the locations of the luminaires in the lighting system. Here it is assumed that the processing part of the controller device is configured to coordinate a mapped location of a radar-reflective target with a mapped location of an identified luminaire, as represented by step 801 in fig. 8. Coordinating of this kind means that when the controller device has found a radar-reflective target with the method described above with reference to fig. 7, it compares its mapped location to the previously mapped locations of luminaires to find one or more luminaires that according to said mapping would be closest to the mapped location of the detected radar-reflective target. A luminaire being identified means that the controller device knows some identifier of the luminaire, so that it is capable of forming and transmitting targeted triggering signals to which that particular luminaire should react.

Step 802 in fig. 8 represents transmitting a triggering signal to that identified luminaire or those identified luminaires that the coordinating at step 801 showed to be closest to the mapped location of the detected radar-reflective target. The idea here is to make that identified luminaire or those identified luminaires transmit a radar signal that are approximately at the same location as the detected radar-reflective target. Step 803 in fig. 8 represents receiving such radar signal(s), and steps 804, 805, and 806 represent mapping the radar signal(s) received from the identified luminaire(s) into refined location (s) of the identified luminaire(s). The process can be repeated for a number of times, in particular if the same radar-reflective target is detected repeatedly and/or if the radar-reflective target is found to move. Following how the radar-reflective target moves and executing consecutive rounds of the method of fig. 8 can give more accurate information about the location (s) of the luminaire (s) than what could be acquired simply with the method of fig. 6 explained above.

Fig. 9 illustrates another advantageous method that the controller device may execute, in particular if one or more luminaires of the lighting system are of the type that can switch on autonomously and transmit a switch-on message to other devices to indicate, which luminaire switched on. This kind of luminaires are known for example from patent publications EP3171674 and EP2919562. The purpose of transmitting the switch-on message may be, for example, to enable other luminaires to learn frequently occurring patterns of user movement within the space and to take corresponding preparatory action. A radio communications system may be used to transmit and receive the switch-on messages between the devices of the lighting system. Other possibilities exist, though, like encoding a switch-on message into the amount of light emitted by the luminaire that is switching on in the form of a rapid on/off pulse train that is too fast for the human eye to notice.

Step 901 in fig. 9 represents receiving a switch-on message from a particular luminaire. The controller device may use for example its receiver of a radio communications system for that, if it has one. Steps 902 and 903 in fig. 9 represent two possible examples of identifying, in response to the switch-on message received at step 901, one or more additional luminaires that according to previously accomplished mapping into locations have a certain locational relationship with respect to said particular luminaire.

Step 902 represents selecting at least some of said additional luminaires on the basis of their closeness in location with the luminaire from which the switch-on message was received at step 901. The purpose may be for example to find luminaires that are sufficiently close to the luminaire that switched on so that activating them to at least some level may provide safety and/or comfort to a user who mainly resides under the luminaire that switched on. Step 903 represents selecting at least some of said additional luminaires on the basis of their closeness in location with a structure to be illuminated. This way the lighting system may for example provide additional safety and/or comfort to the user by shining at least some light upon a wall, an exit route, and/or other structure that the user may want to see while residing under the luminaire that switched on.

Steps 904 and 905 follow steps 902 and 903 respectively and represent selecting the light levels that such other luminaires should assume that were found to have a certain locational relationship with respect to the luminaire from which the switch-on message was received at step 901. As an example, step 904 may comprise selecting a constant, lower lighting level for each luminaire neighboring that from which the switch-on message was received, and/or progressively lower lighting levels for a number of luminaires as a function of their increasing distance from the luminaire from which the switch-on message was received. Step 905 may comprise for example selecting appropriate lighting levels for luminaires close to walls so that a standardized or recommended level of comfort illuminance is achieved on the walls. Another possibility is to select a low constant level for all or a large proportion of the luminaires in the whole space, and somewhat higher levels to those close to walls, doors, and/or other structural features.

Sequences 902-904 and 903-905 are alternative but not exclusive, so that the method may comprise any or both of them. Additionally or alternatively other approaches may be taken to the selecting of the luminaires that according to the previously accomplished mapping into locations have a certain locational relationship with respect to that luminaire from which the switch-on message was received.

Step 906 in fig. 9 represents transmitting selective switch-on commands to those additional luminaires that were identified, for example by taking the approach of any or both of steps 902 or 903. The switch-on commands being selective means that they are directed to particularly those additional luminaires. The selective switch-on commands may comprise indications of intended light levels, which are those determined at any or both of steps 904 or 905.

Above it was assumed that the luminaire from which the switch-on message was received switched on autonomously (which also explained the designation "switch-on message"). According to an alternative embodiment the lighting system may have all switching-on decisions made at the controller device. The luminaires may be equipped with sensors, or sensors may otherwise be placed in the space. The idea in such an embodiment is that the sensors report all their findings to the controller device, which analyses these findings and concludes, where in the space is needed actual lighting for the direct utilization by users and where is needed supporting lighting for the additional safety and comfort of the users. The controller device may then transmit switch-on commands to all those luminaires that such conclusions point at.

In addition to or as an alternative of radars, the detection of the presence and movements of users in the space can be made with other kinds of sensors such as passive infrared (PIR) sensors for example. However, in comparison to other sensor technologies the use of radars involves advantages, like the ability to measure distance and the ability of the measurement signals to penetrate through lightweight materials. The last-mentioned allows for example placing the (antennas of the) radar devices behind lightweight structural panels, such as textile-based panels used in false ceilings, if needed. The users may feel more comfortable when they do not need to visually notice the presence of a system that can detect and track their movements.

In the description above the controller device has been considered as a different kind of device than the luminaires. This not a mandatory requirement, because the controller device may be one of the luminaires, just equipped and programmed for more advanced operation than "basic" luminaires in the system.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. Controller device (501) for controlling luminaires of a lighting system, comprising:
- a transmitter (502, 503) for transmitting triggering signals to said luminaires,
- a directional radar receiver (503) for receiving radar signals transmitted by said luminaires in response to receiving the triggering signals, and
- a processing part (504, 505) configured to map said received radar signals into locations of said luminaires in relation to a fixed installation location of the controller device;
wherein said processing part (504, 505) is configured to use, in said mapping of received radar signals into locations of said luminaires, the directional property of said directional radar receiver (503) for determining directions to said luminaires.

2. A controller device according to claim 1, wherein said processing part (504, 505) is configured to use, in said mapping of received radar signals into locations of said luminaires, time differences between said transmitted triggering signals and said received radar signals for determining distances between said controller device and said luminaires.

3. A controller device according to claim 1 or 2, wherein said transmitter is a radar transmitter (503).

4. A controller device according to claim 1 or 2, wherein said transmitter is a wireless transmitter (502) of a radio communications system.

5. A controller device according to claim 4, comprising additionally a radar transmitter (503).

6. A controller device according to any of claims 3 or 5, wherein:
- said directional radar receiver (503) is configured to receive radar echoes that are reflections of radar signals transmitted by said radar transmitter (503),
- said processing part (504, 505) is configured to map said radar echoes into locations of radar-reflective targets by using the directional property of said directional radar receiver (503) for determining directions to said targets.

7. A controller device according to claim 6, wherein said processing part (504, 505) is configured to use, in said mapping of said radar echoes into said locations of said targets, time differences between said transmitted radar signals and said received radar echoes for determining distances between said controller device and said targets.

8. A controller device according to claim 6 or 7, wherein:
- said processing part (504, 505) is configured to coordinate a mapped location of a radar-reflective target with a mapped location of an identified luminaire,
- said transmitter (502, 503) is configured to transmit a triggering signal to said identified luminaire, and
- said processing part (504, 505) is configured to map a subsequent radar signal received from said identified luminaire into a refined location of said identified luminaire.

9. A controller device according to any of the preceding claims, wherein:
- the controller device comprises a receiver (502) of a radio communications system,
- the processing part (504, 505) is configured to identify, in response to a switch-on message received from a particular luminaire through said receiver (502), one or more additional luminaires that according to previously accomplished mapping into locations of said luminaires have a certain locational relationship with respect to said particular luminaire,
- said transmitter (502, 503) is configured to transmit selective switch-on commands to said one or more additional luminaires, wherein said selective switch-on commands comprise an indication of intended light level.

10. A controller device according to claim 9, wherein said processing part (504, 505) is configured to select at least some of said additional luminaires on the basis of their closeness in location with said particular luminaire.

11. A controller device according to claim 9 or 10, wherein said processing part is configured to select at least some of said additional luminaires on the basis of their closeness in location with a structure to be illuminated.

12. A method for controlling luminaires of a lighting system, comprising:
- transmitting (601) triggering signals to said luminaires,
- receiving (602) radar signals transmitted by said luminaires in response to receiving the triggering signals, and
- mapping (603, 604, 605) said received radar signals into locations of said luminaires in relation to a fixed installation location of a device transmitting said triggering signals;
wherein said mapping of received radar signals into locations of said luminaires comprises using a directional radar receiver for determining directions (603) from which said radar signals were received, and mapping (605) said directions into corresponding directions to said luminaires.

13. A method according to claim 12, wherein said mapping of received radar signals into locations of said luminaires comprises using time differences between said transmitted triggering signals and said received radar signals for determining distances (604) to said luminaires.

14. A method according to claim 12 or 13, comprising:
- identifying (902, 903), in response to a switch-on message received (901) from a particular luminaire, one or more additional luminaires that according to previously accomplished mapping into locations of said luminaires have a certain locational relationship with respect to said particular luminaire, and
- transmitting (906) selective switch-on commands to said one or more additional luminaires, wherein said selective switch-on commands comprise an indication of intended light level.

15. A method according to claim 14, wherein at least some of said additional luminaires are selected (902, 903) on the basis of at least one of:
their closeness in location with said particular luminaire, their closeness in location with a structure to be illuminated.

## Patentansprüche

1. Steuervorrichtung (501) zum Steuern von Leuchten eines Beleuchtungssystems, umfassend:
einen Sender (502, 503) zum Senden von Auslösesignalen an die Leuchten,
einen Richtungsradarempfänger (503) zum Empfangen von Radarsignalen, die von den Leuchten in Reaktion auf den Empfang der Auslösesignale gesendet werden, und
ein Verarbeitungsteil (504, 505), das eingerichtet ist, die empfangenen Radarsignale in Positionen der Leuchten in Bezug auf einen festen Installationsort der Steuervorrichtung abzubilden;
wobei das Verarbeitungsteil (504, 505) eingerichtet ist, bei der Abbildung von empfangenen Radarsignalen in Positionen der Leuchten die Richtungseigenschaft des Richtungsradarempfängers (503) zur Bestimmung von Richtungen zu den Leuchten zu verwenden.

2. Steuervorrichtung nach Anspruch 1, wobei das Verarbeitungsteil (504, 505) eingerichtet ist, bei der Abbildung von empfangenen Radarsignalen in Positionen der Leuchten Zeitunterschiede zwischen den gesendeten Auslösesignalen und den empfangenen Radarsignalen zur Bestimmung von Entfernungen zwischen der Steuervorrichtung und den Leuchten zu verwenden.

3. Steuervorrichtung nach Anspruch 1 oder 2, wobei der Sender ein Radarsender (503) ist.

4. Steuervorrichtung nach Anspruch 1 oder 2, wobei der Sender ein drahtloser Sender (502) eines Funkkommunikationssystems ist.

5. Steuervorrichtung nach Anspruch 4, ferner einen Radarsender (503) umfassend.

6. Steuervorrichtung nach einem der Ansprüche 3 oder 5, wobei:
der Richtungsradarempfänger (503) eingerichtet ist, Radarechos zu empfangen, die Reflexionen von Radarsignalen sind, die von dem Radarsender (503) gesendet wurden,
das Verarbeitungsteil (504, 505) eingerichtet ist, die Radarechos in Positionen von radarreflektierenden Zielen abzubilden, indem es die Richtungseigenschaft des Richtungsradarempfängers (503) zur Bestimmung von Richtungen zu den Zielen verwendet.

7. Steuervorrichtung nach Anspruch 6, wobei das Verarbeitungsteil (504, 505) eingerichtet ist, bei der Abbildung der Radarechos in die Positionen der Ziele die Zeitunterschiede zwischen den gesendeten Radarsignalen und den empfangenen Radarechos zur Bestimmung der Entfernungen zwischen der Steuervorrichtung und den Zielen zu verwenden.

8. Steuervorrichtung nach Anspruch 6 oder 7, wobei:
das Verarbeitungsteil (504, 505) eingerichtet ist, eine abgebildete Position eines radarreflektierenden Ziels mit einer abgebildeten Position einer identifizierten Leuchte zu koordinieren,
der Sender (502, 503) eingerichtet ist, ein Auslösesignal an die identifizierte Leuchte zu senden, und
das Verarbeitungsteil (504, 505) eingerichtet ist, ein nachfolgendes Radarsignal, das von der identifizierten Leuchte empfangen wird, auf eine verfeinerte Position der identifizierten Leuchte abzubilden.

9. Steuervorrichtung nach einem der vorhergehenden Ansprüche, wobei:
die Steuervorrichtung einen Empfänger (502) eines Funkkommunikationssystems umfasst,
das Verarbeitungsteil (504, 505) eingerichtet ist, als Reaktion auf eine Einschaltbenachrichtigung, die von einer bestimmten Leuchte über den Empfänger (502) empfangen wird, eine oder mehrere zusätzliche Leuchten zu identifizieren, die gemäß einer zuvor durchgeführten Abbildung in Positionen der Leuchten eine bestimmte Ortsbeziehung in Bezug auf die bestimmte Leuchte haben,
der Sender (502, 503) eingerichtet ist, selektive Einschaltbefehle an die eine oder mehrere zusätzliche Leuchten zu senden, wobei die selektiven Einschaltbefehle eine Angabe des beabsichtigten Lichtpegels umfassen.

10. Steuervorrichtung nach Anspruch 9, wobei der Verarbeitungsteil (504, 505) eingerichtet ist, zumindest einige der zusätzlichen Leuchten auf der Grundlage ihrer räumlichen Nähe zu der bestimmten Leuchte auszuwählen.

11. Steuervorrichtung nach Anspruch 9 oder 10, wobei das Verarbeitungsteil eingerichtet ist, zumindest einige der zusätzlichen Leuchten auf der Grundlage ihrer räumlichen Nähe zu einer zu beleuchtenden Struktur auszuwählen.

12. Verfahren zur Steuerung von Leuchten eines Beleuchtungssystems, umfassend:
Senden (601) von Auslösesignalen an die Leuchten,
Empfangen (602) von Radarsignalen, die von den Leuchten in Reaktion auf den Empfang der Auslösesignale gesendet werden, und
Abbilden (603, 604, 605) der empfangenen Radarsignale in Positionen der Leuchten in Bezug auf einen festen Installationsort einer Vorrichtung, die die Auslösesignale sendet;
wobei das Abbilden der empfangenen Radarsignale in die Positionen der Leuchten die Verwendung eines Richtungsradarempfängers zur Bestimmung der Richtungen (603), aus denen die Radarsignale empfangen wurden, und das Abbilden (605) dieser Richtungen zu den entsprechenden Richtungen zu den Leuchten umfasst.

13. Verfahren nach Anspruch 12, wobei das Abbilden von empfangenen Radarsignalen zu Positionen der Leuchten die Verwendung von Zeitunterschieden zwischen den gesendeten Auslösesignalen und den empfangenen Radarsignalen zur Bestimmung von Entfernungen (604) zu den Leuchten umfasst.

14. Verfahren nach Anspruch 12 oder 13, umfassend:
Identifizieren (902, 903), als Reaktion auf eine von einer bestimmten Leuchte empfangene Einschaltbenachrichtigung (901), einer oder mehrerer zusätzlicher Leuchten, die gemäß einer zuvor durchgeführten Abbildung in die Positionen der Leuchten eine bestimmte räumliche Beziehung in Bezug auf die bestimmte Leuchte aufweisen, und
Senden (906) von selektiven Einschaltbefehlen an die eine oder mehrere zusätzliche Leuchten, wobei die selektiven Einschaltbefehle eine Angabe des beabsichtigten Lichtpegels umfassen.

15. Verfahren nach Anspruch 14, wobei zumindest einige der zusätzlichen Leuchten ausgewählt werden (902, 903) auf der Grundlage von zumindest einem der folgenden Kriterien: ihre räumliche Nähe zu der bestimmten Leuchte, ihre räumliche Nähe zu einer zu beleuchtenden Struktur.

## Revendications

1. Dispositif de commande (501) destiné à la commande des luminaires d'un système d'éclairage, comprenant :
- un transmetteur (502, 503) destiné à la transmission des signaux de déclenchement vers lesdits luminaires,
- un récepteur radar directionnel (503) destiné à la réception des signaux radar transmis par lesdits luminaires en réponse à la réception des signaux de déclenchement, et
- une partie de traitement (504, 505) configurée pour mapper lesdits signaux radar reçus à des emplacements desdits luminaires par rapport à un emplacement d'installation fixe du dispositif de commande ;
ladite partie de traitement (504, 505) étant configurée pour utiliser, dans ledit mappage des signaux radar reçus avec des emplacements desdits luminaires, la propriété directionnelle dudit récepteur radar directionnel (503) pour déterminer des directions vers lesdits luminaires.

2. Dispositif de commande selon la revendication 1, ladite partie de traitement (504, 505) étant configurée pour utiliser, dans ledit mappage des signaux radar reçus avec des emplacements desdits luminaires, les signaux de déclenchement transmis et lesdits signaux radar reçus dudit récepteur radar directionnel pour déterminer des directions vers lesdits luminaires.

3. Dispositif de commande selon la revendication 1 ou 2, ledit transmetteur étant un transmetteur radar (503).

4. Dispositif de commande selon la revendication 1 ou 2, ledit transmetteur étant un transmetteur sans fil (502) d'un système de radiocommunications.

5. Dispositif de commande selon la revendication 4, comprenant en outre un transmetteur radar (503).

6. Dispositif de commande selon l'une quelconque des revendications 3 ou 5 :
- ledit récepteur radar directionnel (503) étant configuré pour recevoir des échos radar qui sont des réflexions de signaux radar transmis par ledit transmetteur radar (503),
- ladite partie de traitement (504, 505) étant configurée pour mapper lesdits échos radar avec des emplacements de cibles réfléchissant le radar à l'aide de la propriété directionnelle dudit récepteur radar directionnel (503) pour déterminer des directions vers lesdites cibles.

7. Dispositif de commande selon la revendication 6, ladite partie de traitement (504, 505) étant configurée pour utiliser, dans ledit mappage desdits échos radar avec lesdits emplacements desdites cibles, les différences de temps entre lesdits signaux radar transmis et lesdits échos radar reçus pour déterminer les distances entre ledit dispositif de commande et lesdites cibles.

8. Dispositif de commande selon la revendication 6 ou 7 :
- ladite partie de traitement (504, 505) étant configurée pour coordonner un emplacement mappé d'une cible réfléchissant le radar avec un emplacement mappé d'un luminaire identifié,
- ledit transmetteur (502, 503) étant configuré pour transmettre un signal de déclenchement audit luminaire identifié, et
- ladite partie de traitement (504, 505) étant configurée pour mapper un signal radar ultérieur reçu à partir dudit luminaire identifié avec un emplacement affiné dudit luminaire identifié.

9. Dispositif de commande selon l'une quelconque des revendications précédentes :
- le dispositif de commande comprenant un récepteur (502) d'un système de radiocommunications,
- la partie de traitement (504, 505) étant configurée pour identifier, en réponse à un message d'allumage reçu à partir d'un luminaire particulier par l'intermédiaire dudit récepteur (502), un ou plusieurs luminaires supplémentaires qui, selon le mappage précédemment effectué avec des emplacements desdits luminaires, ont une certaine relation d'emplacement par rapport audit luminaire particulier,
- ledit transmetteur (502, 503) étant configuré pour transmettre des commandes d'allumage sélectives auxdits un ou plusieurs luminaires supplémentaires, lesdites commandes d'allumage sélectives comprenant une indication du niveau de lumière prévu.

10. Dispositif de commande selon la revendication 9, ladite partie de traitement (504, 505) étant configurée pour sélectionner au moins certains desdits luminaires supplémentaires sur la base de leur proximité à l'emplacement avec ledit luminaire particulier.

11. Dispositif de commande selon la revendication 9 ou 10, ladite partie de traitement étant configurée pour sélectionner au moins certains desdits luminaires supplémentaires sur la base de leur proximité à l'emplacement avec une structure à éclairer.

12. Procédé de commande de luminaires d'un système d'éclairage, comprenant :
- la transmission (601) des signaux de déclenchement auxdits luminaires,
- la réception (602) des signaux radar émis par lesdits luminaires en réponse à la réception des signaux de déclenchement, et
- le mappage (603, 604, 605) desdits signaux radar reçus aux emplacements desdits luminaires par rapport à un emplacement d'installation fixe d'un dispositif transmettant lesdits signaux de déclenchement ;
ledit mappage des signaux radar reçus avec des emplacements desdits luminaires comprenant l'utilisation d'un récepteur radar directionnel pour déterminer des directions (603) à partir desquelles lesdits signaux radar ont été reçus, et le mappage (605) desdites directions avec des directions correspondantes auxdits luminaires.

13. Procédé selon la revendication 12, ledit mappage des signaux radar reçus avec des emplacements desdits luminaires comprenant l'utilisation des différences de temps entre lesdits signaux de déclenchement transmis et lesdits signaux radar reçus pour déterminer des distances (604) auxdits luminaires.

14. Procédé selon la revendication 12 ou 13, comprenant :
- l'identification (902, 903), en réponse à un message d'allumage reçu (901) à partir d'un luminaire particulier, d'un ou plusieurs luminaires supplémentaires qui, selon le mappage précédemment réalisé avec des emplacements desdits luminaires, ont une certaine relation d'emplacement par rapport audit luminaire particulier, et
- la transmission (906) d'instructions d'allumage sélectives auxdits un ou plusieurs luminaires supplémentaires, lesdites commandes d'allumage sélectives comprenant une indication du niveau de lumière prévu.

15. Procédé selon la revendication 14, au moins certains desdits luminaires supplémentaires étant sélectionnés (902, 903) sur la base : de leur proximité en emplacement avec ledit luminaire particulier et/ou de leur proximité en emplacement avec une structure à éclairer.
